# EUROPÄISCHE PATENTSCHRIFT

(11) **EP 1 781 913 B1**
(45) Veröffentlichungstag und Bekanntmachung des Hinweises auf die Patenterteilung: **14.09.2011**
(21) Anmeldenummer: 05782545.7
(22) Anmeldetag: 29.07.2005
(51) Int. Cl.: F02B 67/06, F16H 7/14, H02K 5/00

(54) **DREHPUNKTLAGERUNG EINES AGGREGATES**
CENTRE OF ROTATION SUPPORT FOR AN ASSEMBLY
LOGEMENT A POINT D'APPUI D'UN ORGANE

(30) Priorität: 25.08.2004 DE 102004041044
(43) Veröffentlichungstag der Anmeldung: 09.05.2007
(73) Patentinhaber: Schaeffler Technologies GmbH & Co. KG, 91074 Herzogenaurach (DE)
(72) Erfinder: PAINTA, Ralph, 91469 Hagenbüchach (DE); BOGNER, Michael, 90542 Eckental (DE)
(86) Internationale Anmeldenummer: PCT/EP2005/008228
(87) Internationale Veröffentlichungsnummer: WO 2006/021287

(56) Entgegenhaltungen:
- DE-A1- 10 057 818
- GB-A- 927 186
- GB-A- 1 401 243
- GB-A- 2 240 585
- PATENT ABSTRACTS OF JAPAN Bd. 1996, Nr. 03, 29. März 1996 (1996-03-29) & JP 07 303342 A (NIPPONDENSO CO LTD), 14. November 1995 (1995-11-14)
- PATENT ABSTRACTS OF JAPAN Bd. 1996, Nr. 04, 30. April 1996 (1996-04-30) & JP 07 327336 A (NIPPONDENSO CO LTD), 12. Dezember 1995 (1995-12-12)

## Beschreibung

### Gebiet der Erfindung

Die vorliegende Erfindung betrifft ein Aggregat einer Brennkraftmaschine, das zugleich als Spannsystem für ein Zugmittel eines Zugmitteltriebs und insbesondere als Startergenerator ausgebildet ist. Ein Gehäuse des Aggregats umfasst zwei gegeneinander abgestützte Gehäuseelemente, die eine Trennebene bilden, wobei ein Gehäuseelement ein Haltemittel einschließt, das dazu ausgebildet ist, mit zumindest einem ortsfest, vorzugsweise an der Brennkraftmaschine angeordneten Halter ein Drehlager zu bilden, und das aus einem einstückig mit dem einen Gehäuseelement verbundenen Befestigungsauge gebildet wird, das in der Einbaulage über eine Kontaktfläche an dem Halter zur Bildung des Drehlagers abgestützt ist.

### Hintergrund der Erfindung

Zum Antrieb verschiedener Einzelaggregate der Brennkraftmaschine, wie Wasserpumpe, Klimakompressor, Lenkhilfspumpe, ist vorzugsweise ein Zugmitteltrieb vorgesehen. Dazu verbindet ein Zugmittel, insbesondere ein Riemen, die einzelnen Riemenscheiben der anzutreibenden Aggregate, den Antriebsorganen, mit der Riemenscheibe des Abtriebsorgans, eine vorzugsweise mit der Kurbelwelle der Brennkraftmaschine in Verbindung stehende Riemenscheibe. Der schlupffreie Antrieb aller anzutreibenden Aggregate erfordert ein Spannsystem, mit dem eine ausreichende, vorzugsweise schlupffreie Vorspannung des Zugmittels sichergestellt werden kann.

Ein derartiges Spannsystem ist beispielsweise aus der DE 43 00 178 C1 bekannt, bei dem eine Spannrolle im eingebauten Zustand an dem Zugmittel kraftbeaufschlagt abgestützt ist. Das Spannsystem umfasst weiterhin ein ortsfest angeordnetes Basisteil, dessen Symmetrieachse gleichzeitig eine Drehachse für den Schwenkarm bildet, an dem außenseitig eine Spannrolle drehbar angeordnet ist. Zur Erzielung einer kraftschlüssigen Abstützung der Spannrolle an dem Zugmittel ist zwischen dem Basisteil und dem Schwenkarm eine Torsionsfeder eingesetzt.

Die DE 100 57 818 A1 offenbart einen als Zweischeibentrieb ausgebildeten Zugmitteltrieb einer Brennkraftmaschine. Der Antrieb erfolgt dabei über ein drehstarr mit einer Kurbelwelle der Brennkraftmaschine in Verbindung stehendes Abtriebsorgan, das über ein Zugmittel, einen Riemen, die weitere Riemenscheibe, das Antriebsorgan verbindet. Als Antriebsorgan ist dazu ein StarterGenerator vorgesehen, der für die Brennkraftmaschine sowohl die Funktion des Starters als auch des Generators übernimmt. Eine ausreichende Vorspannung des Zugmittels, zur Erzielung eines schlupffreien Antriebs wird mit dem schwenkbar angeordneten Antriebsorgan erreicht, das zusätzlich von einem Federmittel kraftbeaufschlagt ist.

Gattungsgemäße Aggregate sind aus der JP 07303342 A und der JP 07327336 bekannt.

### Aufgabe der Erfindung

Der vorliegenden Erfindung liegt die Aufgabe zugrunde, ein Aggregat einer Brennkraftmaschine, das zugleich als ein Spannsystem für ein Zugmittel eines Zugmitteltriebs ausgelegt ist, nach den Merkmalen des Oberbegriffs von Anspruch 1 weiterzubilden, zur Erzielung einer kostenoptimierten Drehpunktlagerung. Weiterhin soll die Lagerung so gestaltet werden, dass sich eine optimale Krafteinleitung in die Drehpunktlagerung einstellt.

Erfindungsgemäß wird diese Aufgabe durch die Merkmale des Anspruchs 1 gelöst.

Die Erfindung sieht vor, dass die Kontaktfläche fluchtend mit der Trennebene der Gehäuseelemente verläuft, so dass eine gleichzeitige Bearbeitung des einen Gehäuseelements im Bereich der Trennebene und der Kontaktfläche ermöglicht ist. Die Gehäuseelemente sind dabei über bearbeitete Flächen im Bereich der Trennebene gegeneinander abgestützt. Damit ist sichergestellt, dass sich eine großflächige Abstützung der Gehäuseelemente und damit ein verwindungssteifes Gehäuse einstellt.

Eine weitere Ausgestaltung sieht vor, dass zur Bildung des Haltemittels nur ein Gehäuseelement bzw. eine Gehäusehälfte des Aggregats ein Befestigungsauge aufweist. Die Lage und Anordnung des Haltemittels erfolgt dabei so, dass die mit der Trennebene übereinstimmende, gemeinsam bearbeitete Stirnfläche des Befestigungsauges die Kontaktfläche darstellt, mit der das Haltemittel, das Befestigungsauge an dem Halter abgestützt ist.

Die erfindungsgemäßen Konzepte ermöglichen eine kostenoptimierte Fertigung des Gehäuses, da die Bearbeitung der Gehäusehälften im Bereich der Trennebene keine nachträgliche Bearbeitung der Abstützflächen oder der Kontaktfläche der Haltemittel erfordert.

Die Trennebene von dem Gehäuse des Aggregats verläuft außermittig vorteilhaft so, dass diese möglichst nahe in Richtung der Riemenscheibe des Aggregats angeordnet ist. Durch die Zuordnung des Haltemittels an dem breiteren, von der Riemenscheibe abgewandten Gehäuseelement kann ein sich zwischen der Krafteinleitung des Zugmittels und dem Drehlager einstellender Hebelarm vorteilhaft verringert werden. Der verkürzte Hebelarm verringert wirksam das Kippmoment und die damit verbundene Kantenlast des Gleitlagers.

Alternativ dazu ist das erfindungsgemäße Drehlager ebenfalls mit einem außermittig geteilten Gehäuse kombinierbar, bei dem das dem Zugmittel zugeordnete Gehäuseelement breiter ausgeführt ist im Vergleich zu dem zugehörigen weiteren Gehäuseelement.

Eine bevorzugte Ausgestaltung der Erfindung sieht vor, dass der Halter, der mit der Brennkraftmaschine mittelbar oder unmittelbar in Verbindung steht eine drehbare Buchse einschließt, die im Einbauzustand an dem Haltemittel des schwenkbaren Aggregates drehfixiert ist. Als Befestigungsmittel dient dabei insbesondere eine Schraube, mit der die Bauteile des Drehlagers, die Buchse des Halters und der Halter verspannt sind.

Eine weitere Ausgestaltung der Erfindung bezieht sich auf die Gestaltung des Halters, der erfindungsgemäß als U-förmiger Träger oder als Gabel gestaltet ist. Diese Bauteile bilden zwei axial zueinander versetzte Aufnahmen, zwischen denen das bzw. die Befestigungsaugen eingesetzt sind. Eine Welle bzw. eine Befestigungsschraube verbindet die Aufnahmen, führt gleichzeitig das Haltemittel und folglich ist damit das Aggregat positioniert.

Zur Erzielung einer ungehinderten Funktion des Drehlagers, bei dem das Haltemittel mit einem zwei Aufnahmen aufweisenden Halter zusammenwirkt, wird erreicht, in dem eine Aufnahme als Festlager und die weitere Aufnahme als Loslager ausgebildet ist.

Als Befestigungsmittel eignet sich bevorzugt eine selbstfurchende bzw. selbstschneidende Schraube, die allein, d. h. ohne Schraubenmutter eine wirksame, dauerfeste Verbindung und Sicherung ermöglicht.

Vorteilhaft bietet es sich außerdem an, dem erfindungsgemäßen Spannsystem, dargestellt durch das über das Drehlager schwenkbare Aggregat, eine separate Konsole bzw. Bracket zuzuordnen, die bevorzugt mittels einer Verschraubung lösbar an der Brennkraftmaschine befestigt ist. Die Konsole bildet dabei einen Halter, der mit Haltemitteln des Aggregats das Drehlager bildet.

Eine optimale reibungsarme Lagerung des Aggregats kann vorteilhaft über ein Gleitlager erfolgen, mit dem die Buchse in dem Halter eingesetzt und drehstarr mit dem Aggregat verbunden ist. Alternativ schließt die Erfindung ebenfalls eine umgekehrte Anordnung ein, bei der die Buchse über ein Gleitlager drehbar dem Haltemittel, beispielsweise den Befestigungsaugen des Generators zugeordnet ist und die andererseits gegenüber dem Halter lagefixiert ist.

Das erfindungsgemäße Drehlager kann außerdem mit einer Dämpfungseinrichtung gekoppelt werden, um so nachteilige Resonanzen des Zugmitteltriebs zu eliminieren oder aufgrund der Drehungleichförmigkeit der Brennkraftmaschine in den Zugmitteltrieb eingeleitete Schwingungen zu dämpfen. Als Dämpfungseinrichtung bietet es sich an, das Drehlager vorgespannt auszubilden, bei dem beispielsweise zwischen den sich relativ verdrehbaren Bauteilen des Drehlagers eine Reibscheibe angeordnet ist.

Ein schlupffreier Antrieb des Zugmitteltriebs erfordert ein ausreichend vorgespanntes Zugmittel. Bevorzugt ist das schwenkbare Aggregat, das gleichzeitig die Funktion des Spannsystems übernimmt, mit einem Drehlager versehen, dessen Lage es ermöglicht, das Eigengewicht des schwenkbaren Aggregats zu nutzen, um die Vorspannung des Zugmittels zu beeinflussen. Unterstützend kann ein Kraftmittel zusätzlich vorgesehen werden, mit dem das Aggregat, der Startergenerator, in eine Drehrichtung kraftbeaufschlagt wird, die das Zugmittel vorspannt.

### Kurze Beschreibung der Zeichnungen

Nachfolgend wird die Erfindung anhand von dre (Figuren 3, 4, 5) in insgesamt fünf Figuren abgebildeten Ausführungsbeispielen näher erläutert. Es zeigen:
- Figur 1: den Aufbau eines Drehlagers eines Spannsystems;
- Figur 2: ein weiteres Drehlager für ein Spannsystem;
- Figur 3: in einer vergrößerten Darstellung ein Detail des Drehlagers gemäß Figur 2;
- Figur 4: einen Teilbereich eines schwenkbar als Spannsystem ausgeführten Aggregats, bei dem das Haltemittel mit nur einem Gehäuseelement des Aggregats verbunden ist;
- Figur 5: in einer prinzipiellen Darstellung einen Zugmitteltrieb, der als Spann- system ein schwenkbares Aggregat einschließt.

### Ausführliche Beschreibung der Zeichnungen

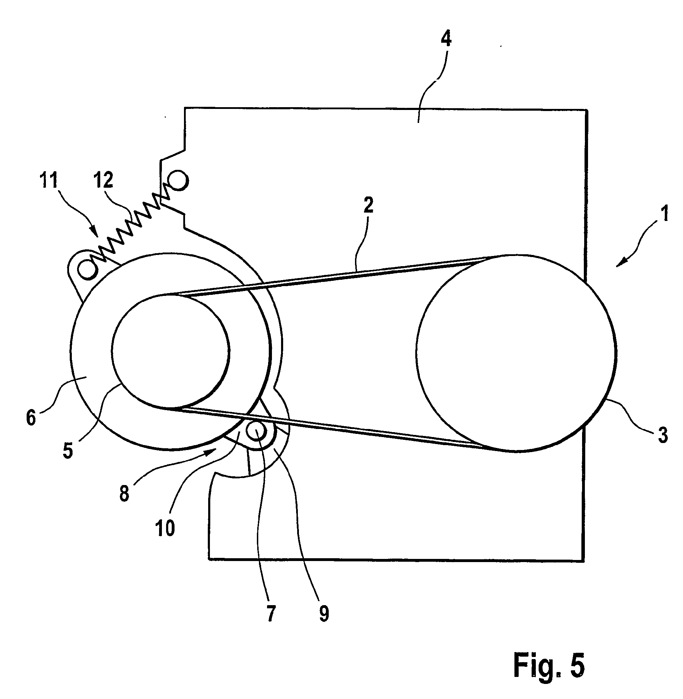

Zunächst wird anhand der Figur 5 ein bekanntes Spannsystem für einen Zugmitteltrieb erläutert, bestehend aus einem schwenkbar angeordneten Aggregat. Der Zugmitteltrieb 1 gemäß Figur 5 ist als ein Zweischeibentrieb ausgeführt, bei dem ein Zugmittel 2 ein Abtriebsorgan 3, ein mit einer Kurbelwelle einer Brennkraftmaschine 4 verbundenes Riemenrad sowie ein weiteres Riemenrad eines Antriebsorgans 5 verbindet. Als Antriebsorgan 5 ist ein schwenkbar angeordnetes Aggregat 6, insbesondere ein Startergenerator vorgesehen, welcher für die Brennkraftmaschine 4 abhängig vom Betriebsmodus in der Startphase die Funktion des Starters und bei laufender Brennkraftmaschine 4 die Funktion eines Generators übernimmt.

Zur Erzielung einer ausreichenden Vorspannung des Zugmittels 2 ist das Aggregat 6 um eine Drehachse 7 eines Drehlagers 8 schwenkbar. Das Drehlager 8 umfasst einen einstückig mit der Brennkraftmaschine 4 in Verbindung stehenden Halter 9 sowie zugehörige Haltemittel 10 des Aggregates 6. Ein Verschwenken des Aggregates 6 im Gegenuhrzeigersinn erhöht die Vorspannung des Zugmittels 2. Die Lage des Drehlagers 8 begünstigt die Vorspannung des Zugmittels 2, da diese das Gewicht des Aggregates 6 nutzend eine im Gegenuhrzeigersinn ausübende Kraftkomponente ausübt. Das Aggregat 6, welches die Funktion eines Spannsystems 11 übernimmt, ist versehen mit einem Kraftmittel 12, insbesondere eine zwischen der Brennkraftmaschine 4 und dem Aggregat 6 eingesetzten Feder, mit der die Vorspannung des Zugmittels 2 erhöht werden kann.

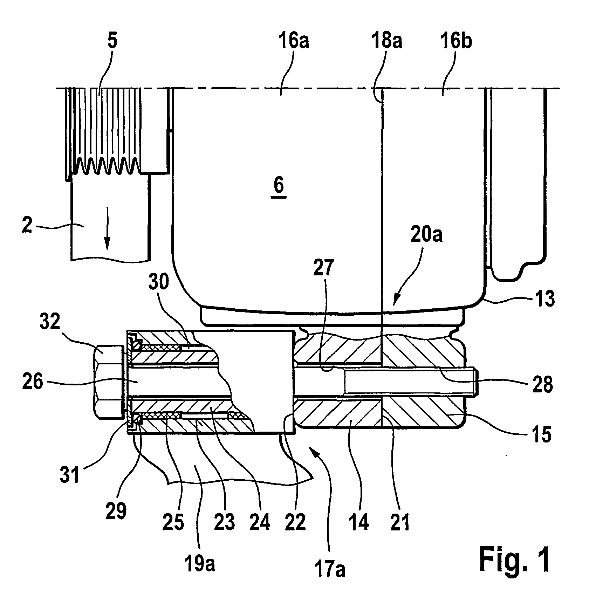

Die Figur 1 zeigt ein erstes Drehlager 17a, welches als Haltemittel 20a einstückig mit einem Gehäuse 13 des Aggregats 6 verbundene Befestigungsaugen 14, 15 umfasst sowie einen Halter 19a. Das Gehäuse 13 des Aggregates 6 wird aus den zwei Gehäuseelementen 16a, 16b, gebildet, die über eine Trennebene 18a abgestützt sind. Die Trennebene 18a setzt sich über den Bereich der Befestigungsaugen 14, 15 fort, so dass mittels einer Bearbeitung des jeweiligen Gehäuseelementes 16a, 16b einschließlich der zugehörigen Befestigungsaugen 14 bzw. 15 gleichzeitig eine Abstützfläche 21 bearbeitet ist, über die sich die Befestigungsaugen 14, 15 in der Einbaulage abstützen.

Das Befestigungsauge 14 ist weiterhin mit einer von der Abstützfläche 21 abgewandten Stirnfläche unmittelbar an einer Stirnfläche des Halters 19a abgestützt, die gemeinsam eine Kontaktfläche 22 bilden. Der direkt oder indirekt mit der Brennkraftmaschine 4 verbundene Halter 19a ist mit einer Durchgangsbohrung 23 versehen, in die eine Buchse 24 eingesetzt ist. Zur Erzielung einer Relativbewegung bzw. Relatiwerdrehung der Buchse 24 gegenüber dem Halter 19a ist in einem Ringspalt, der sich zwischen der Durchgangsbohrung 23 und einer Mantelfläche der Buchse 24 einstellt ein Gleitlager 25 eingesetzt. Im Einbauzustand ist die Buchse 24 mittels eines Befestigungsmittels, einer Schraube 26 kraftschlüssig an dem Befestigungsauge 14 und damit dem Haltemittel 20a abgestützt.

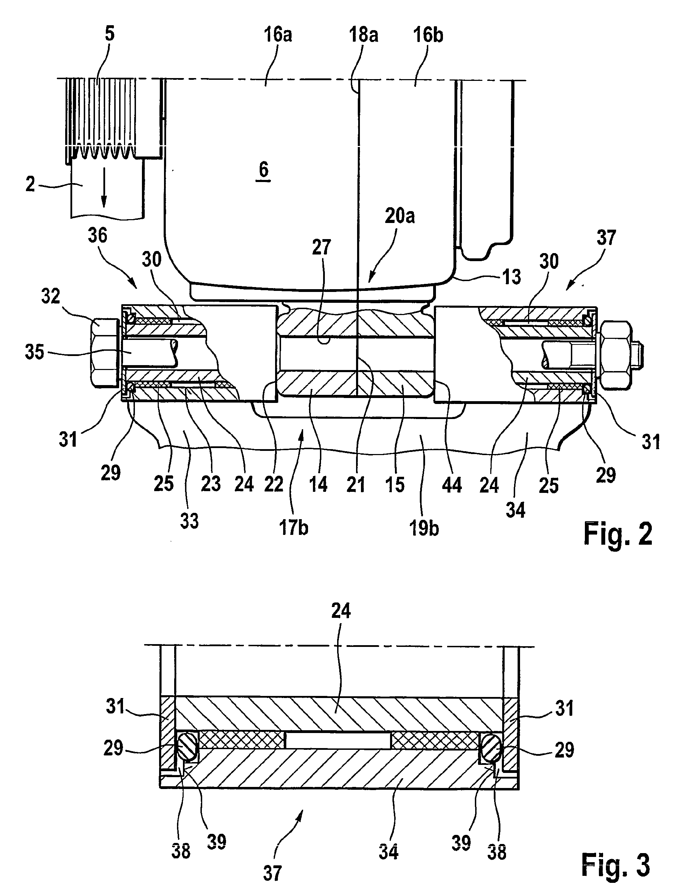

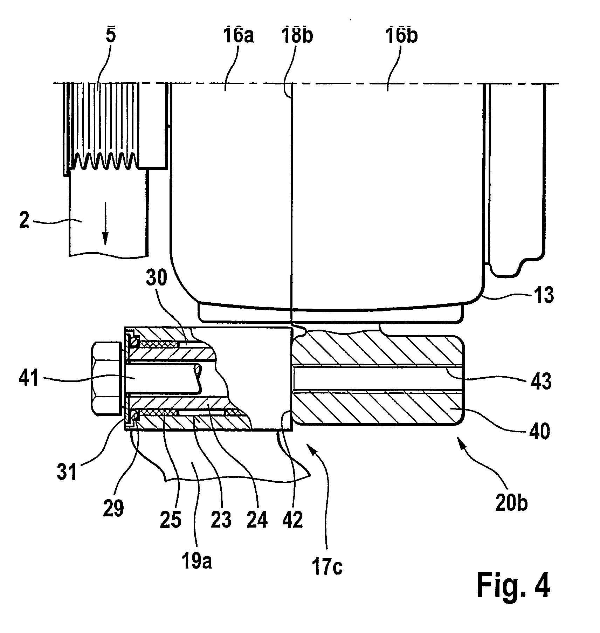

Durch diese Maßnahme stellt sich im Betriebszustand eine gewollte Verdrehung der Buchse 24 gegenüber dem Halter 19a ein, da die Buchse 24 drehfest mit dem Haltemittel 20a und damit dem Aggregat 6 verbunden ist. Die Schraube 26 ist dabei zunächst in einer Aufnahmebohrung 27 des Befestigungsauges 14 geführt und weiterhin in einer Gewindebohrung 28 des Befestigungsauges 15 eingeschraubt. Zur Abdichtung des Gleitlagers 25 ist ein Dichtring 29 vorgesehen, welcher einen sich einstellenden Ringspalt 30 zwischen dem Halter 19a und der Buchse 24 abdichtet. Stirnseitig ist der Dichtring 28 von einer Scheibe 31 abgedeckt, die zwischen einem Schraubenkopf 32 und der Buchse 24 eingesetzt ist. Vorteilhaft ermöglicht die Gestaltung des Drehlagers 17a eine Verschiebung in Richtung des Zugmittels 2, wodurch die vom Zugmittel 2 in das Aggregat 6 in Pfeilrichtung eingebrachte Kraftrichtung ein verringertes Kippmoment in dem Drehlager 17a auslöst, was sich vorteilhaft auf die Belastung des Gleitlagers 25 auswirkt, wodurch eine erhöhte Lebensdauer realisierbar ist. Bei den in den Figuren 2 und 4 gezeigten zwei weiteren Ausführungsbeispielen sind die mit dem ersten Ausführungsbeispiel (Figur 1) übereinstimmenden Bauteile mit gleichen Bezugsziffern versehen, so dass zur Vermeidung von Wiederholungen auf die Beschreibung des ersten Ausführungsbeispiels Bezug genommen werden kann.

Die Figur 2 zeigt das Drehlager 17b, die einen U-förmig gestalteten Halter 19b umfasst, beispielsweise eine separate Konsole, die einerseits lösbar an der Brennkraftmaschine 4 befestigt ist und zwei axial beabstandete Aufnahmen 33, 34 umfasst. Zwischen den Aufnahmen 33, 34 ist das Haltemittel 20a, bestehend aus den Befestigungsaugen 14, 15 eingesetzt. Die Aufnahmen 33, 34 in Verbindung mit den darin eingesetzten Buchsen 24, gemäß dem ersten Ausführungsbeispiel ermöglichen eine spielfreie Anordnung. Im Einbauzustand werden die Buchsen 24 mittels der Schraube 35 über die Kontaktflächen 22, 44 an das Haltemittel 20a, die Befestigungsaugen 14, 15 gepresst. Dieser kraftschlüssige Verband gewährleistet bei einer Schwenkbewegung des Aggregats 6 eine Relativbewegung der Buchsen 24 gegenüber der jeweiligen Aufnahme 33, 34, wobei die Aufnahmen vergleichbar dem Ausführungsbeispiel gemäß Figur 1 Gleitlager 25 umfassen. Zur Erzielung einer reibungsarmen Wirkungsweise des Drehlagers 17b schließt dieses eine als Festlager 36 ausgebildete Aufnahme 33 sowie eine als Loslager 37 ausgeführte Aufnahme 34 ein.

Den Aufbau des Loslagers 37 verdeutlicht die Figur 3. Die in einem vergrößerten Maßstab abgebildete Aufnahme 34 zeigt das Loslager 37 im eingebauten Zustand, bei dem die Gestaltung der Buchse 24 einen Überstand 38 gegenüber einer stirnseitigen Kontur 39 der Aufnahme 34 sicherstellt. Der ein Einbauspiel darstellende Überstand 38 verhindert wirksam eine Anlage der Scheibe 31 an der Kontur 39 der Aufnahme 24, wodurch das Aggregat 6 im Betriebszustand ungehindert verschwenken kann.

Die Figur 4 zeigt ein Ausführungsbeispiel mit dem Drehlager 17c, welches den Halter 19a gemäß dem Ausführungsbeispiel aus Figur 1 umfasst sowie das Haltemittel 20b. Abweichend zu den zuvor beschriebenen Ausführungsbeispielen ist das Aggregat 6 gemäß Figur 4 mit einer Trennebene 18b versehen, die in Richtung des Zugmittels 2 versetzt angeordnet ist. Dieser Aufbau verringert weiterhin in vorteilhafter Weise eine Querkraft, die von dem Zugmittel 2 in Pfeilrichtung in das Drehlager 17c eingeleitet wird, aufgrund eines reduzierten Abstandes zwischen dem Zugmittel 2 und dem Drehlager 17c,

Das Haltemittel 20b umfasst lediglich ein einstückig mit dem Gehäuseelement 16b verbundenes Befestigungsauge 40, dessen Kontaktfläche 42 fluchtend mit der Trennebene 18a verläuft. Vorteilhaft kann damit die Trennebene 18ab wie auch die Kontaktfläche 42 kostengünstig in einem Arbeitsvorgang bearbeitet werden. Aufgrund der relativ großen Breite des Befestigungsauges 40 bietet es sich an, als Befestigungsmittel eine selbstfurchende Schraube 41 zu verwenden, die selbstschneidend in eine teilweise vorbereitete Gewindebohrung 43 des Befestigungsauges 40 eingeschraubt ist, zur Erzielung einer lagefixierten Abstützung der Buchse 24 über die Kontaktfläche 42 an dem Befestigungsauge 40.

### Bezugszahlen

- 1: Zugmitteltrieb
- 2: Zugmittel
- 3: Abtriebsorgan
- 4: Brennkraftmaschine
- 5: Antriebsorgan
- 6: Aggregat
- 7: Drehachse
- 8: Drehlager
- 9: Halter
- 10: Haltemittel
- 11: Spannsystem
- 12: Kraftmittel
- 13: Gehäuse
- 14: Befestigungsauge
- 15: Befestigungsauge
- 16a: Gehäuseelement
- 16b: Gehäuseelement
- 17a: Drehlager
- 17b: Drehlager
- 17c: Drehlager
- 18a: Trennebene
- 18 b: Trennebene
- 19a: Halter
- 19b: Halter
- 20a: Haltemittel
- 20b: Haltemittel
- 21: Abstützfläche
- 22: Kontaktfläche
- 23: Durchgangsbohrung
- 24: Buchse
- 25: Gleitlager
- 26: Schraube
- 27: Aufnahmebohrung
- 28: Gewindebohrung
- 29: Dichtring
- 30: Ringspalt
- 31: Scheibe
- 32: Schraubenkopf
- 33: Aufnahme
- 34: Aufnahme
- 35: Schraube
- 36: Festlager
- 37: Festlager
- 38: Überstand
- 39: Kontur
- 40: Befestigungsauge
- 41: Schraube
- 42: Kontaktfläche
- 43: Gewindebohrung
- 44: Kontaktfläche

## Patentansprüche

1. Aggregat einer Brennkraftmaschine (4), das zugleich als Spannsystem für ein Zugmittel (2) eines Zugmitteltriebs (1) und insbesondere als Startergenerator ausgebildet ist, wobei ein Gehäuse (13) des Aggregats (6) zwei gegeneinander abgestützte Gehäuseelemente (16a, 16b) umfasst, die eine Trennebene (18b) bilden, wobei ein Gehäuseelement (16b) ein Haltemittel (20b) einschließt, das dazu ausgebildet ist, mit zumindest einem ortsfest, vorzugsweise an der Brennkraftmaschine (4) angeordneten Halter (9; 19a) ein Drehlager (8; 17c) zu bilden, und das aus einem einstückig mit dem einen Gehäuseelement (16b) verbundenen Befestigungsauge (40) gebildet wird, das in der Einbaulage über eine Kontaktfläche (42) an dem Halter (19a) zur Bildung des Drehlagers (8, 17c) abgestützt ist, **dadurch gekennzeichnet, dass** die Kontaktfläche (42) fluchtend mit der Trennebene (18b) der Gehäuseelemente (16a, 16b) verläuft, so dass eine gleichzeitige Bearbeitung des einen Gehäuseelements (16b) im Bereich der Trennebene (18b) und der Kontaktfläche (42) ermöglicht ist.

## Claims

1. Assembly of an internal combustion engine (4), which assembly is designed at the same time as a tension system for a traction means (2) of a traction drive (1) and, in particular, as a starter generator, a housing (13) of the assembly (6) comprising two housing elements (16a, 16b) which are supported with respect to one another and form a parting plane (18b), one housing element (16b) including a holding means (20b) which is designed to form, with at least one holder (9; 19a) arranged fixedly, preferably on the internal combustion engine (4), a rotary bearing (8; 17c), and which is formed from a fastening lug (40) which is connected in one piece to the one housing element (16b) and, in the installation position, is supported via a contact face (42) on the holder (19a) in order to form the rotary bearing (8, 17c), **characterized in that** the contact face (42) runs in alignment with the parting plane (18b) of the housing elements (16a, 16b), so that simultaneous machining of the one housing element (16b) in the region of the parting plane (18b) and of the contact face (42) becomes possible.

## Revendications

1. Organe d'un moteur à combustion interne (4), qui est réalisé à la fois comme système de serrage pour un moyen de traction (2) d'un entraînement à moyen de traction (1) et notamment en tant qu'alterno-démarreur, un boîtier (13) de l'organe (6) comprenant deux éléments de boîtier (16a, 16b) supportés l'un contre l'autre, qui forment un plan de séparation (18b), un élément de boîtier (16b) comportant un moyen de retenue (20b) qui est réalisé de manière à former avec au moins un support (9 ; 19a) disposé fixement, de préférence sur le moteur à combustion interne (4), un palier pivotant (8 ; 17c), et qui est formé à partir d'un oeillet de fixation (40) connecté d'une seule pièce à l'un des éléments de boîtier (16b), qui est supporté dans la position de montage par le biais d'une surface de contact (42) sur le support (19a) pour former le palier pivotant (8, 17c), **caractérisé en ce que** la surface de contact (42) s'étend en affleurement avec le plan de séparation (18b) des éléments de boîtier (16a, 16b), de sorte qu'un usinage simultané de l'un des éléments de boîtier (16b) dans la région du plan de séparation (18b) et de la surface de contact (42) soit possible.
